# EUROPÄISCHE PATENTSCHRIFT

(11) **EP 1 538 364 B1**
(45) Veröffentlichungstag und Bekanntmachung des Hinweises auf die Patenterteilung: **11.11.2009**
(21) Anmeldenummer: 04027104.1
(22) Anmeldetag: 15.11.2004
(51) Int. Cl.: F16D 66/02

(54) **Scheibenbremse und Überwachungseinrichtung für eine solche Scheibenbremse**
Disc brake and monitoring device for such a brake
Frein à disque et dispositif de surveillance pour un tel frein

(30) Priorität: 04.12.2003 DE 10356801
(43) Veröffentlichungstag der Anmeldung: 08.06.2005
(73) Patentinhaber: Wabco Radbremsen GmbH, 68229 Mannheim (DE)
(72) Erfinder: Deckhut, Andreas, 76829 Landau i.d.Pf. (DE); Stumpf, Martin, 68623 Lampertheim (DE)
(74) Vertreter: Leinweber & Zimmermann

(56) Entgegenhaltungen:
- WO-A-97/29298
- WO-A-2004/111484
- DE-A1- 4 312 377
- DE-A1- 10 036 109
- DE-A1- 10 132 968
- DE-C1- 19 903 620
- US-A- 4 186 822

## Beschreibung

Die Erfindung betrifft eine Scheibenbremse mit einer Bremsscheibe, einem Bremssattel, an dem sich eine mittels eines Drehhebels zu betätigende und quer zu einer Drehachse der Bremsscheibe liegende Zuspannwelle abstützt, einer Druckspindel, die zu einer Nachstelleinrichtung gehört und über die beim Zuspannen eine Zuspannkraft von der Zuspannwelle auf die Bremsscheibe übertragen wird, und einer Überwachungseinrichtung, insbesondere für den Verschleiß der Bremse, den Hub der Bremse und/oder eine Nachstellung der Bremse.

Eine solche Scheibenbremse ist beispielsweise aus der EP-0 784 162 A2 bekannt. Danach bildet ein Verschleißsensor 50 mit einem Druckstück 9 eine Baueinheit, wobei Relativbewegungen der Druckspindeln 10, 11 gegenüber einem Druckstück durch den Sensor erfaßt werden, indem dieser mittels Zahnrads, Zahnstange usw. mit den Druckspindeln verbunden ist. Diese Lösung bedarf einer großen Anzahl von Bauelementen. Darüber hinaus sind mechanische Bearbeitungen an Lager- und Kontaktflächen erforderlich. Schließlich nimmt die aus den beschriebenen Elementen zusammengesetzte Verschleißüberwachungseinrichtung radialen Einbauraum in der Bremse ein.

Die gattungsbildende DE 43 12 377 A1 zeigt in Figur 3 einen Sensor 12, der seitlich einer Betätigungseinrichtung 6 im Bremssattel gelagert ist und mit der Mantelfläche der Betätigungseinrichtung 6 mittels eines Verschiebestifts 17 verbunden ist. Auch diese Lösung erfordert eine mechanische Bearbeitung an den Lager- und Kontaktflächen und es wird radialer Einbauraum benötigt.

Nach der DE 100 36 109 A1 ist eine Referenzeinrichtung 7 vorgesehen, die zur Erfassung an mehreren Meßpunkten mit den entsprechenden Bremsenteilen verbunden sein muß. Daher sind Befestigungen erforderlich. Zudem können sich äußere Einflüsse auf das Meßergebnis und auf die Referenzeinrichtung auswirken.

Die oben beschriebenen bekannten Lösungen zur Überwachung sind zwar prinzipiell geeignet, die an sie gestellten Anforderungen zu erfüllen. Jedoch sind insbesondere hinsichtlich ihres Aufbaus und hinsichtlich ihrer Anordnung in der Bremse Verbesserungen wünschenswert, die einerseits weniger Einbauraum durch weniger Teile erforderlich machen - und somit zu einer Bauraumverkleinerung der gesamten Bremse beitragen - und andererseits so mit den dem Abgriff dienenden Bremsenteilen in Verbindung stehen, daß eine genaueste Sensierung sichergestellt ist. Dabei sollen sich Toleranzen nicht nachteilig auf das Meßergebnis auswirken. Bei einem Belagwechsel soll keine Neujustierung / Kalibrierung erforderlich sein. Der Abgriff / Kontakt soll direkt an demjenigen Teil erfolgen, dessen Position zu bestimmen ist, beispielsweise im Hinblick auf den Verschleiß oder auf den Hub der Bremse.

Es ist daher Aufgabe der Erfindung, die Scheibenbremse der eingangs genannten Art derart zu verbessern, daß sie einfacher aufgebaut ist, weniger Bauraum einnimmt und den Zustand der Bremse genau erfaßt.

Die Genauigkeit ist insbesondere unter dem Aspekt wichtig, daß die Meßgrößen mehr und mehr für elektronische Bremsenkomponenten verwendet werden. Mit anderen Worten dürfen keine negativen Einflußgrößen, wie etwa Schwingungen, Bremsenverspannungen, Toleranzen oder äußere Umwelteinflüsse das Meßergebnis beeinträchtigen.

Erfindungsgemäß wird die oben genannte Aufgabe von einer Scheibenbremse nach Anspruch 1 gelöst.

Dadurch, daß sich das Meßelement an der Druckspindel abstützt, sind Getriebe oder dergleichen entbehrlich, wodurch der Gesamtaufbau vereinfacht ist. Da die Abstützung an einer der Bremsscheibe abgewandten Stirnfläche der Druckspindel erfolgt, kann die Überwachungseinrichtung in bauraumsparender Weise von der Bremsscheibe her gesehen "hinter" der Druckspindel angeordnet werden. Insbesondere radialer Bauraum ist nicht erforderlich. Ebenfalls wegen der Anordnung der Überwachungseinrichtung "hinter" der Druckspindel, wodurch ein Referenzpunkt des Bremssattels ebenfalls "hinter" der Druckspindel verwendet werden kann, ist das Erfassungsergebnis nicht durch Bremsverspannungen oder dergleichen beeinträchtigt. Es ist daher exakter.

Erfindungsgemäß bevorzugt stützt sich das Meßelement am Boden eines Sacklochs in der Druckspindel ab. Dadurch kann das Sackloch als Einbauraum für die Überwachungseinrichtung genutzt werden, wodurch der Gesamtbauraum verkleinert wird.

Das Meßelement liegt erfindungsgemäß bevorzugt konzentrisch zu der Druckspindel. Dadurch wird die Genauigkeit der Überwachung maximiert, weil konzentrisch zu der Druckspindel beispielsweise Bremsverspannungen keine Auswirkungen haben.

Nach einer als besonders einfach bevorzugten Ausführungsform der Erfindung ist vorgesehen, daß das Meßelement ein Stift ist.

Zur weiteren Bauraumverkürzung kann erfindungsgemäß vorgesehen sein, daß das Meßelement ein Teleskop-Stift ist.

Bevorzugt dient eine elastische Einrichtung zum Vorspannen des Meßelements gegen die Stirnfläche der Druckspindel. Dadurch ist eine verläßliche Abstützung des Meßelements an der Stirnfläche der Druckspindel sichergestellt, was zur Genauigkeit des Erfassungsergebnisses beiträgt.

Es ist zumindest wünschenswert, eventuell sogar gesetzlich vorgeschrieben, daß das Maß des Verschleißes ohne weiteres ermittelt werden kann. Daher ist nach einer besonders bevorzugten Ausführungsform der Erfindung eine von außen sichtbare Verschleißanzeige vorgesehen.

Eine besonders einfache Ausführungsform der Erfindung sieht dabei vor, daß das Meßelement zu der Verschleißanzeige gehört.

Die Überwachungseinrichtung kann zur Übertragung eines Überwachungssignales an eine Leitung angeschlossen sein, die sich nach einer besonders bevorzugten Ausführungsform der Erfindung ausgehend von der Überwachungseinrichtung quer zur Drehachse der Bremsscheibe erstreckt. Da die Überwachungseinrichtung wegen der Anordnung "hinter" der Druckspindel drehinvariant ist, wird auf diese Weise große Freiheit bei der Ausgestaltung der übrigen Anordnungen erzielt.

Im folgenden ist die Erfindung unter Bezugnahme auf die beiliegende Zeichnung mit weiteren Einzelheiten näher erläutert. Dabei zeigen
- Figur 1: eine Schnittansicht eines Ausführungsbeispiels der erfindungsgemäßen Scheibenbremse,
- Figur 2: eine andere Schnittansicht der Scheibenbremse nach Figur 1,
- Figur 3: die gleiche Ansicht wie Figur 1, jedoch von einem Ausführungsbeispiel mit Verschleißanzeige, und
- Figur 4: die gleiche Ansicht wie Figur 2, jedoch von einem Ausführungsbeispiel, bei dem die Druckspindel unmittelbar in das Druckstück eingeschraubt ist.

Die in der Zeichnung dargestellten Scheibenbremsen weisen jeweils einen Bremssattel 1 auf, der in üblicher Weise mit seinen beiden Sattelschenkeln eine Bremsscheibe 2 übergreift, zu deren beiden Seiten Bremsbeläge 3, 4 vorhanden sind. Der Bremssattel 1 selbst weist wenigstens auf einer Scheibenseite eine Zuspannvorrichtung auf, bei deren Betätigung die Bremsbeläge 3, 4 gegen die Bremsscheibe 2 gedrückt werden. In dem Bremssattel 1 ist ein Drehhebel 5.1 um eine zu der Hauptebene der Bremsscheibe 2 parallel verlaufende Drehachse schwenkbar gelagert. An dem freien Ende des Drehhebels 5.1 greift eine in der Zeichnung nicht dargestellte Betätigungseinrichtung im Sinne einer Bremsenbetätigung an. Ein Verschwenken des Drehhebels 5.1 bewirkt eine Drehung einer Zuspannwelle 5, die mit einem Druckstück 6 gekoppelt ist. Das Druckstück 6 erstreckt sich innerhalb des Bremssattels 1 parallel zu der Hauptebene der Bremsscheibe 2. Es wird bei Betätigen des Drehhebels 5.1 in Richtung auf die Bremsscheibe 2 gedrückt. Die Zuspannvorrichtung selbst wird mittels wenigstens einer Druckfeder 7 vorgespannt. Die Zuspannwelle 5 hat eine Nockenkontur. Es wird ausdrücklich darauf hingewiesen, daß die Erfindung nicht auf die in der Zeichnung dargestellte Nockenkontur der Zuspannwelle 5 beschränkt ist. Vielmehr kann die Zuspannwelle 5 beliebig ausgestaltet sein.

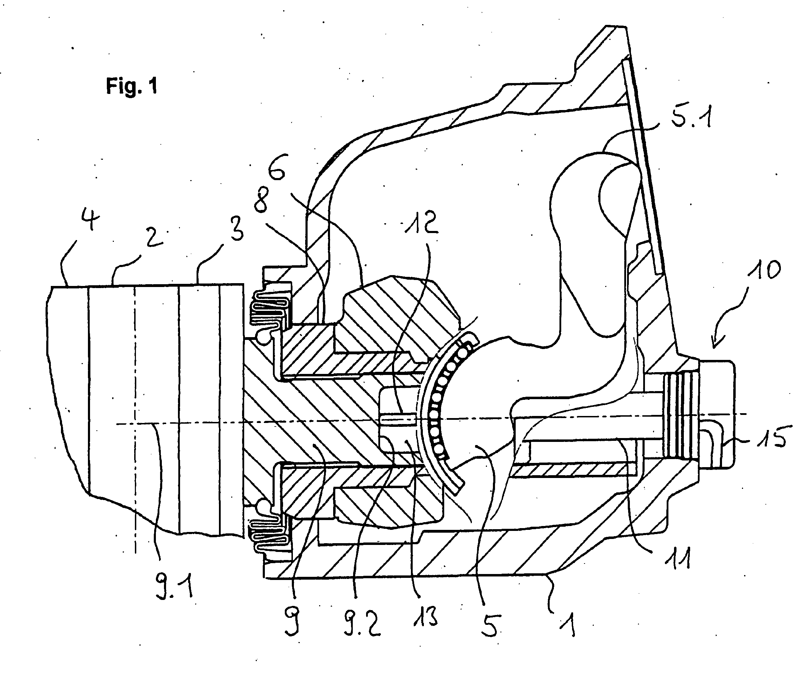

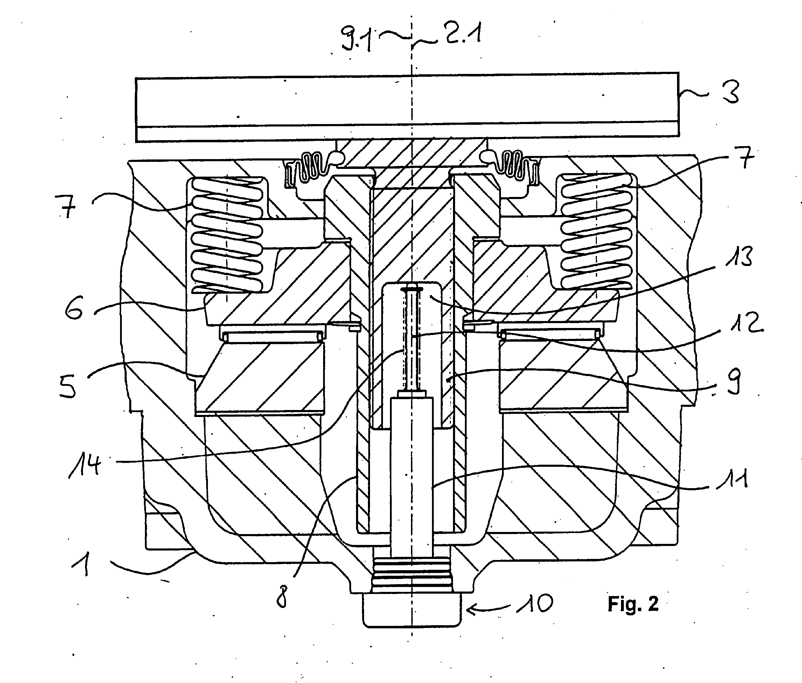

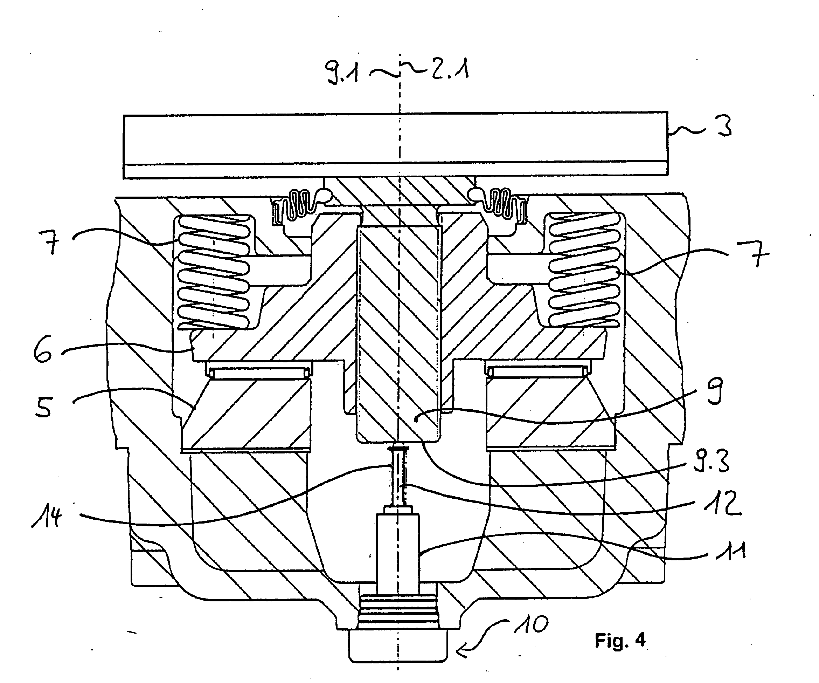

Eine Mittelachse 9.1 der Druckspindel 9 liegt parallel zu einer Mittelachse 2.1 der Bremsscheibe 2. Bei den in der Zeichnung dargestellten Ausführungen mit nur einer Druckspindel 9 fällt die Mittelachse 9.1 der Druckspindel 9 mit der Mittelachse des Druckstücks 6 zusammen. Konzentrisch zu der Druckspindel 9 ist bei den Ausführungen nach den Figuren 1 bis 3 eine justierbare Mutter 8 vorgesehen, die zusammen mit der Druckspindel 9 eine Druckspindeleinheit bildet. Diese Druckspindeleinheit wird über das Druckstück 6 gegen den Bremsbelag 3 gedrückt, wenn der Drehhebel 5.1 betätigt wird. Mittels eines in der Zeichnung nicht dargestellten Nachstellgetriebes erfolgt eine Verdrehung der Druckspindeleinheit zum Ausgleich des Bremsbelag- /Bremsscheibenverschleißes bzw. zur Einstellung des Bremsenlüftspiels, wobei die Druckspindel 9 mit zunehmendem Verschleiß aus der Mutter 8 herausgeschraubt wird. Bei der Ausgestaltung nach Figur 4 ist die Mutter 8 weggelassen. Stattdessen ist die Druckspindel 9 direkt in das Druckstück 6 eingeschraubt. Das Nachstellgetriebe ist allgemein bekannt, weshalb es hier nicht näher beschrieben werden muß.

In der Zeichnung ist eine Verschleißüberwachungseinrichtung 10 gezeigt, die am Ende des Bremssattels und koaxial bzw. zumindest annähernd koaxial zu der Drehachse 9.1 der Druckspindel 9 liegt. Ein federvorgespannter Stift 12, der aus einem Gehäuse 11 der Verschleißüberwachungseinrichtung 10 herausragt, stützt sich an einer der Bremsscheibe 2 abgewandten Stirnfläche 9.2, 9.3 der Druckspindel 9 ab. Bei den Ausgestaltungen nach den Figuren 1 bis 3 wird die Stirnfläche 9.2 von dem Boden eines Sacklochs 13 gebildet. Bei der Ausgestaltung nach Figur 4 fällt die Stirnfläche 9.3 der Druckspindel 9 mit deren Ende zusammen. Eine Feder zum Vorspannen des Stiftes 12 ist mit der Bezugszahl 14 bezeichnet. Mit der beschriebenen Anordnung ist eine genaueste Messung der Relativlage der Druckspindel 9 zu dem Bremssattel 1 möglich. Je weiter sich die Druckspindel 9 (beispielsweise in Figur 1 nach links) herausschraubt, um so weiter wird auch der Stift 12 verschoben. Der Stift 12 muß nicht unbedingt exakt koaxial zu der Drehachse 9.1 des Druckstücks 9 liegen. Vielmehr ist auch ein leichter Radialversatz tolerabel. In einem solchen Fall muß nur die von dem Stift 12 überstrichene Stirnfläche 9.2, 9.3 parallel zur Hauptebene der Bremsscheibe 2 liegen. In jedem Fall werden alle Relativverschiebungen, die aus Verschleiß oder aus Hubbewegungen resultieren, direkt und unverfälscht erfaßt.

Zur weiteren Reduzierung der axialen Länge kann der Stift 12 auch teleskopartig aufgebaut sein.

Aus Gründen der Bauraumminimierung ist die Druckspindeleinheit 8, 9 zum Ende des Bremssattels 1 hin offen, so daß sich der Stift 12 und das Gehäuse 11 der Verschleißüberwachungseinrichtung 10 zumindest teilweise darin anordnen lassen. Mit anderen Worten taucht die Verschleißüberwachungseinrichtung 10 zumindest teilweise in die Druckspindeleinheit 8, 9 ein, so daß sie weder die Länge, noch die Höhe, noch die Breite der Bremse gegenüber einer Ausgestaltung ohne eine solche Überwachungseinrichtung vergrößert.

Die Druckfeder 14 gewährleistet verläßlichen Kontakt zu der Stirnfläche 9.2, 9.3 der Druckspindel 9 in jeder Betriebsstellung, so daß in jedem Fall eine verläßliche Erfassung der Axialstellung der Druckspindel 9 und damit insbesondere des Verschleißes gegeben ist.

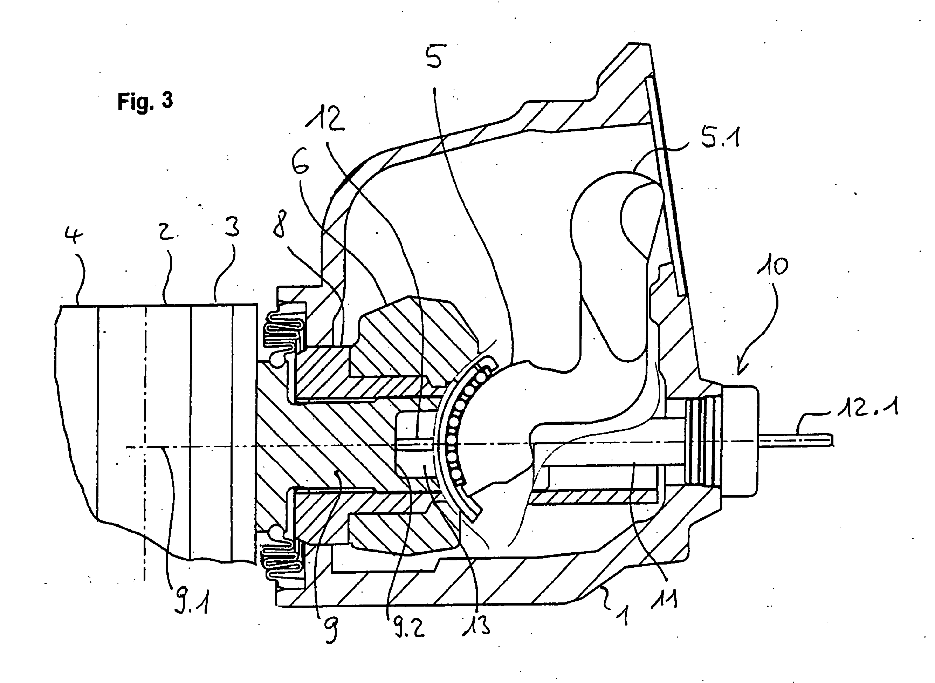

Bei der Ausgestaltung nach Figur 3 ragt der Stift 12 mit einem Abschnitt 12.1 in der Zeichnung nach rechts aus dem Gehäuse 11 heraus. Dadurch ist eine (oftmals vom Gesetzgeber geforderte) optische Verschleißanzeige realisiert. Mit zunehmendem Verschleiß wird nämlich der Stift 12 und damit sein Ende 12.1 in der Zeichnung nach links wandern. Die Dimensionierung kann dabei beispielsweise derart gewählt werden, daß bei noch tolerablem Verschleiß das Stiftende 12.1 sichtbar ist, wohingegen das Verschwinden des Stiftendes 12.1 in dem Gehäuse 11 ein Anzeichen dafür ist, daß die Bremsbeläge ausgetauscht werden müssen.

Zum elektrischen Anschluß der Verschleißüberwachungseinrichtung 10 ist ein Kabelgang in der Verschleißüberwachungseinrichtung 10 vorgesehen. Dieser Kabelgang ist nur in Figur 1 schematisch angedeutet. Er ist mit der Bezugszahl 15 bezeichnet. Der Kabelgang 15 ist abgewinkelt. Mit anderen Worten dient er zur Umlenkung eines Kabels, das innerhalb des Bremssattels 1 parallel zu der Drehachse 9.1 der Drehspindel 9 geführt wird, unmittelbar nach dem Austritt aus dem Bremssattel 1 jedoch in Form eines Knicks geführt wird, so daß es quer zu der Drehachse 9.1 der Druckspindel 9 aus dem Gehäuse 11 der Verschleißüberwachungseinrichtung 10 austritt. Dadurch, daß sich die Verschleißüberwachungseinrichtung 10 ohne Verlust des Kontaktes zwischen dem Stift 12 und der Stirnfläche 9.2, 9.3 verdrehen läßt, kann jede Einbaulage der genannten Kabel entsprechend den örtlichen Gegebenheiten realisiert werden.

Wenngleich die Erfindung im Zusammenhang mit einer Einspindelbremse erläutert worden ist, ist sie nicht auf diese Ausführungsform beschränkt. Vielmehr ist sie auch auf Mehrspindelbremsen anwendbar.

Zusammenfassend bietet die Erfindung folgende Vorteile:

Die Überwachungseinrichtung nutzt platzsparend Innenraum der Druckspindeleinheit, so daß kein zusätzlicher Einbauraum innerhalb des Bremssattels erforderlich ist.

Es sind keine Hilfsmittel zum Abgriff der Zustandsgrößen erforderlich, weil direkt an der Drehspindel abgegriffen wird. Dadurch wirken sich auch keine Toleranzen mehr auf das Meßergebnis aus.

Eine Kalibrierung / Justierung nach einem Bremsbelagwechsel ist nicht erforderlich. Jede Stellung der sich drehenden Druckspindel wird direkt erfaßt. Dies gilt auch bei einem eventuellen Austausch der Überwachungseinrichtung, weil der sofortige direkte Kontakt in jeder Stellung der Druckspindel erfaßt wird.

Die Überwachungseinrichtung ist in einfachster Weise (ohne weitere Zusatzteile) mit einer optischen Verschleißkontrolle kombinierbar.

Durch die Anordnung innerhalb der Druckspindel in der drehneutralen Zone ist der Stift von den eigentlichen Drehbewegungen der Druckspindel entkoppelt, wodurch keine Drehbewegungen auf die Überwachungseinrichtung einwirken bzw. übertragen werden müssen. Der Stift ist ausschließlich längsbeweglich.

Die Überwachungseinrichtung ist wegen ihrer Anordnung frei von Bremsenverspannungen.

Die gewünschte bzw. gewählte Art der Abgriffgröße durch die Überwachungseinrichtung ist nicht auf die Erfassung des Summenverschleißes beider Beläge bzw. der Bremsscheibe bei einer Gleitsattelscheibenbremse beschränkt. Die Abgriffsgröße kann gleichzeitig als Hubüberwachung der Zuspannvorrichtung dienen, weil hierbei gegensätzliche Relativbewegungen zwischen dem Bremssattel und der Druckspindel stattfinden. Ferner kann ein kontinuierlicher und/oder stufenweiser Abgriff und/oder ein Grenzwertabgriff erfolgen. Dies gilt sowohl für Ausführungen mit Gleitsattel als auch für Ausführungen mit Pendelsattel. Ebenso gilt dies auch für Festsattelscheibenbremsen mit ein- oder beidseitig der Bremsscheibe angeordneter Zuspannvorrichtung, beispielsweise mit Einzelsensierung des Zustands der Bremse.

Der innere Aufbau der Überwachungseinrichtung mit einem Medium zur Erfassung der Position des Stiftes in Abhängigkeit von der Spindelposition kann entsprechend den jeweiligen Erfordernissen frei gewählt werden, beispielsweise in elektrischer Form (Potentiometer).

Die Art der Übertragung der Abgriffgröße an eine Auswerte- bzw. Anzeigevorrichtung und/oder an andere Bremsenkomponenten wie beispielsweise eine Nachstellvorrichtung, beispielsweise zu deren Kontrolle und/oder Aktivierung, ist beliebig. Die Übertragung kann elektrischer Art durch Verkabelung sein. Die Überwachungseinrichtung kann aber auch einen Sender zur Datenübertragung an einen Empfänger aufweisen, der seinerseits dann der Fernübertragung von Bremszuständen dient oder direkt auf Steuer- und Regelkomponenten der Bremsanlage einwirkt.

Die in der obigen Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Scheibenbremse mit
einer Bremsscheibe (2),
einem Bremssattel (1), an dem sich eine mittels eines Drehhebels (5.1) zu betätigende und quer zu einer Drehachse (2.1) der Bremsscheibe (2) liegende Zuspannwelle (5) abstützt,
einer Druckspindel (9), die zu einer Nachstelleinrichtung (8, 9) gehört und über die beim Zuspannen eine Zuspannkraft von der Zuspannwelle (5) auf die Bremsscheibe (2) übertragen wird, und
einer Überwachungseinrichtung (10) mit einem Potentiometer,
**dadurch gekennzeichnet, daß**
die Überwachungseinrichtung (10) ein bezüglich des Bremssattels (1) verschiebliches Meßelement (12) aufweist, das sich an einer der Bremsscheibe (2) abgewandten Stirnfläche (9.2, 9.3) der Druckspindel (9) abstützt.

2. Scheibenbremse nach Anspruch 1, **dadurch gekennzeichnet, daß** sich das Meßelement (12) am Boden eines Sacklochs (13) in der Druckspindel (9) abstützt.

3. Scheibenbremse nach Anspruch 1 oder 2, **dadurch gekennzeichnet, daß** das Meßelement (12) konzentrisch zu der Druckspindel (9) liegt.

4. Scheibenbremse nach einem der vorangehenden Ansprüche, **dadurch gekennzeichnet, daß** das Meßelement (12) ein Stift ist.

5. Scheibenbremse nach einem der vorangehenden Ansprüche, **dadurch gekennzeichnet, daß** das Meßelement (12) ein Teleskop-Stift ist.

6. Scheibenbremse nach einem der vorangehenden Ansprüche, **gekennzeichnet durch** eine elastische Einrichtung (14) zum Vorspannen des Meßelements (12) gegen die Stirnfläche (9.2, 9.3) der Druckspindel (9).

7. Scheibenbremse nach einem der vorangehenden Ansprüche, **gekennzeichnet durch** eine von außen sichtbare Verschleißanzeige (12.1).

8. Scheibenbremse nach Anspruch 7, **dadurch gekennzeichnet, daß** das Meßelement (12) zu der Verschleißanzeige (12.1) gehört.

9. Scheibenbremse nach einem der vorangehenden Ansprüche, **dadurch gekennzeichnet, daß** die Überwachungseinrichtung (10) zur Übertragung eines Überwachungssignals an eine Leitung angeschlossen ist, die sich ausgehend von der Überwachungseinrichtung (10) quer zur Drehachse (9.1) der Druckspindel (9) erstreckt.

## Claims

1. A disc brake comprising
a brake disc (2),
a brake calliper (1) which supports a brake application shaft (5) operated by means of a swivel lever (5.1) and lying laterally to an axis of rotation (2.1) of the brake disc (2),
a pressure spindle (9) which forms part of an adjustment device (8, 9) and by means of which a brake application force is transmitted from the brake application shaft (5) to the brake disc (2) upon applying the brake, and
a monitoring device (10) with a potentiometer,
**characterised in that**
the monitoring device (10) has a measuring element (12) that can be moved in relation to the brake calliper (1) and which is supported on a face surface (9.2, 9.3) of the pressure spindle (9) facing away from the brake disc (2).

2. The disc brake according to Claim 1, **characterised in that** the measuring element (12) is supported on the base of a blind hole (13) in the pressure spindle (9).

3. The disc brake according to Claim 1 or 2, **characterised in that** the measuring element (12) lies concentrically to the pressure spindle (9).

4. The disc brake according to any of the preceding claims, **characterised in that** the measuring element (12) is a pin.

5. The disc brake according to any of the preceding claims, **characterised in that** the measuring element (12) is a telescopic pin.

6. The disc brake according to any of the preceding claims, **characterised by** an elastic device (14) for pretensioning the measuring element (12) against the face surface (9.2, 9.3) of the pressure spindle (9).

7. The disc brake according to any of the preceding claims, **characterised by** a wear indicator (12.1) visible from the outside.

8. The disc brake according to Claim 7, **characterised in that** the measuring element (12) forms part of the wear indicator (12.1).

9. The disc brake according to any of the preceding claims, **characterised in that** the monitoring device (10) is connected to a line for transmitting a monitoring signal, said line extending from the monitoring device (10) laterally to the axis of rotation (9.1) of the pressure spindle (9).

## Revendications

1. Frein à disque comportant :
un disque de frein (2),
un étrier de frein (1) sur lequel s'appuie un arbre d'application (5) pouvant être actionné au moyen d'un levier pivotant (5.1) et disposé transversalement à un axe de rotation (2.1) du disque de frein (2),
une tige de pression (9) appartenant à un dispositif de rattrapage (8, 9), par l'intermédiaire de laquelle une force d'application de freinage issue de l'arbre d'application (5) est transmise au disque de frein (2) lors d'une opération de serrage, et
un dispositif de surveillance (10) comportant un potentiomètre,
**caractérisé en ce que**
le dispositif de surveillance (10) présente un élément de mesure (12) qui est déplaçable par rapport à l'étrier de frein (1) et qui s'appuie sur une face frontale (9.2, 9.3) de la tige de pression (9) qui est détournée du disque de frein (2).

2. Frein à disque selon la revendication 1, **caractérisé en ce que** l'élément de mesure (12) s'appuie sur le fond d'un trou borgne (13) présent sur la tige de pression (9).

3. Frein à disque selon la revendication 1 ou 2, **caractérisé en ce que** l'élément de mesure (12) est disposé concentriquement à la tige de pression (9).

4. Frein à disque selon l'une des revendications précédentes, **caractérisé en ce que** l'élément de mesure (12) est une tige.

5. Frein à disque selon l'une des revendications précédentes, **caractérisé en ce que** l'élément de mesure (12) est une tige télescopique.

6. Frein à disque selon l'une des revendications précédentes, **caractérisé par** un dispositif élastique (14) destiné à précontraindre l'élément de mesure (12) contre la face frontale (9.2, 9.3) de la tige de pression (9).

7. Frein à disque selon l'une des revendications précédentes, **caractérisé par** un dispositif de visualisation de l'usure (12.1) visible depuis l'extérieur.

8. Frein à disque selon la revendication 7, **caractérisé en ce que** l'élément de mesure (12) appartient au dispositif de visualisation de l'usure (12.1).

9. Frein à disque selon l'une des revendications précédentes, **caractérisé en ce que** le dispositif de surveillance (10), pour pouvoir transmettre un signal de surveillance, est raccordé à un fil qui part du dispositif de surveillance (10) et se prolonge transversalement à l'axe de rotation (9.1) de la tige de pression (9).
